# EUROPÄISCHE PATENTSCHRIFT

(11) **EP 3 492 354 B1**
(45) Veröffentlichungstag und Bekanntmachung des Hinweises auf die Patenterteilung: **15.09.2021**
(21) Anmeldenummer: 18207610.9
(22) Anmeldetag: 29.11.2017
(51) Int. Cl.: B62D 37/04, B62D 49/08, A01B 63/102, A01B 63/14

(54) **EINRICHTUNG ZUR BEEINFLUSSUNG DER VERTIKALDYNAMIK EINES LANDWIRTSCHAFTLICHEN TRAKTORS**
ARRANGEMENT FOR INFLUENCING THE VERTICAL DYNAMICS OF AN AGRICULTURAL TRACTOR
DISPOSITIF DESTINÉ À INFLUENCER LA DYNAMIQUE VERTICALE D'UN TRACTEUR AGRICOLE

(30) Priorität: 12.12.2016 DE 102016224753
(43) Veröffentlichungstag der Anmeldung: 05.06.2019
(62) Teilanmeldung aus: 17204378.8
(73) Patentinhaber: Deere & Company, Moline, IL 61265 (US)
(72) Erfinder: Letscher, Jens, 68163 Mannheim (DE); Hollstein, Jürgen, 68163 Mannheim (DE); von Holst, Christian, 68163 Mannheim (DE)
(74) Vertreter: Dehnhardt, Florian Christopher

(56) Entgegenhaltungen:
- EP-A2- 0 299 223
- WO-A1-2015/188926
- WO-A1-2016/045869
- DE-A1-102006 050 126
- US-B2- 6 898 501

## Beschreibung

Die Erfindung betrifft eine Einrichtung zur Beeinflussung der Vertikaldynamik eines landwirtschaftlichen Fahrzeugs, insbesondere eines landwirtschaftlichen Traktors.

In einem solchen Zusammenhang geht aus der EP 0 299 223 A1 ein aus einem Traktor und einem heckseitig befestigten Anbaugerät bestehendes Gespann hervor. Das Anbaugerät ist über ein Dreipunktgestänge höhenverstellbar an dem Traktor angelenkt. Hierzu greift an einem Unterlenker des Dreipunktgestänges ein hydraulischer Kraftheber an, der auf Veranlassung einer elektrohydraulischen Hubwerksregelung betätigbar ist. In einem Stabilisierungsmodus steuert die Hubwerksregelung den hydraulischen Kraftheber unter Verwendung des Anbaugeräts als Tilgermasse derart an, dass an dem Traktor auftretende Nickschwingungen aktiv gedämpft werden. Die Hubwerksregelung verarbeitet zu diesem Zweck Sensorsignale, die von einem Kraftmessbolzen an einer Unterlenkeraufhängung sowie einem Sensor zur Lageerfassung zwischen Anbaugerät und Traktor bereitgestellt werden.

Die WO 2015/188926 A1 zeigt ein Kraftfahrzeug mit einem Radaufhängungssystem mit verstellbarem Dämpfungsgrad, bei dem mittels eines umgebungserfassenden Sensors ein vorausliegender Fahrbahnabschnitt erfasst wird, um durch Analyse des Höhenprofils des Fahrbahnabschnitts auf mögliche Hindernisse zu schließen sowie gegebenenfalls den Dämpfungsgrad des Radaufhängungssystems im Sinne einer Verbesserung des Fahrkomforts entsprechend anzupassen.

Des Weiteren ist aus der DE 196 43 263 A1 eine als gefederte Achsaufhängung ausgebildete Einrichtung für einen landwirtschaftlichen Traktor bekannt. Die Achsaufhängung umfasst eine pendelnd gelagerte Starrachse, die sich mittels eines hydropneumatischen Federdämpfersystems an einem vorderen Rahmenbereich des landwirtschaftlichen Traktors abstützt. Bei der Starrachse handelt es sich um eine Vorderachse des landwirtschaftlichen Traktors.

Da sich, wie im vorstehenden Fall, das Vorhandensein eines Federdämpfersystems bei landwirtschaftlichen Fahrzeugen in aller Regel auf die Vorderachse beschränkt, die Hinterachse aufgrund des damit verbundenen baulichen Aufwands meist ungefedert bleibt, ergeben sich zwangsläufig Einschränkungen hinsichtlich des erreichbaren Fahrkomforts.

Es ist daher Aufgabe der vorliegenden Erfindung, eine an die Verwendung in landwirtschaftlichen Fahrzeugen angepasste Einrichtung zur Beeinflussung der Vertikaldynamik anzugeben.

Diese Aufgabe wird durch eine Einrichtung zur Beeinflussung der Vertikaldynamik eines landwirtschaftlichen Fahrzeugs mit den Merkmalen des Patentanspruchs 1 gelöst.

Die Einrichtung zur Beeinflussung der Vertikaldynamik eines landwirtschaftlichen Fahrzeugs, insbesondere eines landwirtschaftlichen Traktors, umfasst eine an dem landwirtschaftlichen Fahrzeug angebrachte Zusatzmasse, die sich durch Ansteuerung einer zugehörigen Stellanordnung in vertikaler Richtung bewegen lässt, eine Sensoreinrichtung zur Erfassung eines Oberflächenprofils eines vorausliegenden Fahrbahnabschnitts, und eine elektronische Steuereinheit, die nach Maßgabe des erfassten Oberflächenprofils einen für den vorausliegenden Fahrbahnabschnitt zu erwartenden Störungseintrag berechnet, um durch Ansteuerung der Stellanordnung mittels der Zusatzmasse eine den zu erwartenden Störungseintrag reduzierende Ausgleichsbewegung auszuführen, wobei die Ausführung der Ausgleichsbewegung unter Berücksichtigung der Reaktionsträgheit der Stellanordnung erfolgt.

Mit anderen Worten wird durch gezieltes Bewegen der Zusatzmasse ein zum Ausgleich des zu erwartenden Störungseintrags geeignetes Gegenmoment am landwirtschaftlichen Fahrzeug bzw. an einem von diesem umfassten Fahrzeugchassis hervorgerufen. Die erfindungsgemäße Einrichtung stellt somit eine vom Vorhandensein eines konventionellen Federdämpfersystems unabhängige Möglichkeit zur Bewegungs- bzw. Schwingungskompensation an einem landwirtschaftlichen Fahrzeug dar, wobei sich zugleich ein trägheitsbedingter Zeitversatz im Hinblick auf eine wirkungsvolle Reduzierung des zu erwartenden Störungseintrags verringern lässt.

Die Berechnung des zu erwartenden Störungseintrags, also die am landwirtschaftlichen Fahrzeug voraussichtlich auftretende Vertikalbeschleunigung, kann insbesondere durch Bewertung des Verlaufs des erfassten Oberflächenprofils erfolgen, wobei von der elektronischen Steuereinheit zusätzlich die momentane Fahrtgeschwindigkeit des landwirtschaftlichen Fahrzeugs berücksichtigt wird. Der Verlauf des Oberflächenprofils hat hierbei maßgeblichen Einfluss auf die Charakteristik, mithin auf Amplitude und Amplitudenverlauf des zu erwartenden Störungseintrags. So sind Amplitude und Amplitudenverlauf beim Überfahren eines tiefen Schlaglochs oder einer festen Bodenstufe in aller Regel ausgeprägter als im Falle einer langgezogenen Bodenwelle, was eine entsprechende Anpassung der mittels der Zusatzmasse ausgeführten Ausgleichsbewegung notwendig macht.

Vorteilhafte Weiterbildungen der erfindungsgemäßen Einrichtung ergeben sich aus den Unteransprüchen.

Vorzugsweise erfolgt die Berechnung des zu erwartenden Störungseintrags wie auch die Ausführung der Ausgleichbewegung jeweils für eine Vorder- und Hinterachse des landwirtschaftlichen Fahrzeugs separat, d.h. achsindividuell. So tritt der zu erwartende Störungseintrag an der Vorder- und Hinterachse nicht nur entsprechend der momentanen Fahrtgeschwindigkeit des landwirtschaftlichen Fahrzeugs mit zeitlichem Versatz auf, sondern wird aufgrund der meist unterschiedlichen Bereifung bzw. Reifenvolumina auch in unterschiedlichem Umfang gedämpft.

Insofern haben auch die spezifischen Dämpfungseigenschaften des verwendeten Reifenmodells wie auch der momentane Reifendruck Einfluss, sodass es denkbar ist, dass die elektronische Steuereinheit bei der Berechnung des zu erwartenden Störungseintrags wie auch der Ausführung der Ausgleichbewegung neben Angaben hinsichtlich des Reifenmodells zusätzlich Reifendruckinformationen eines Reifendrucküberwachungssystems berücksichtigt. Das Reifendrucküberwachungssystem kann hierbei Bestandteil einer Reifenfüllanlage des landwirtschaftlichen Fahrzeugs sein.

Bei der Stellanordnung kann es sich um einen hydraulisch verschwenkbaren Dreipunkt-Kraftheber im Front- und/oder Heckbereich des landwirtschaftlichen Fahrzeugs handeln. Der Dreipunkt-Kraftheber kann als Zusatzmasse ein landwirtschaftliches Anbaugerät oder ein Anbaugewicht tragen. Bei der Ausführung der Ausgleichsbewegung berücksichtigt die elektronische Steuereinheit die Masse und Schwerpunktlage des landwirtschaftlichen Anbaugeräts bzw. des Anbaugewichts. Diese Angaben sind entweder aufgrund herstellerseitiger Spezifikationen des landwirtschaftlichen Anbaugeräts bzw. Anbaugewichts bekannt oder werden, sofern es sich beispielsweise um ein landwirtschaftliches Anbaugerät mit zeitlich variabler Zuladung handelt, durch Auswertung von am Dreipunkt-Kraftheber sensorisch erfassten Stell- und Kraftgrößen abgeleitet. Eine geeignete Vorgehensweise in Gestalt einer automatisierten Kalibrierroutine ist insoweit in der DE 10 2016 207 200 A1 bzw. der DE 10 2016 207 204 A1 beschrieben.

An dieser Stelle sei angemerkt, dass die Stellanordnung wie auch das von der Stellanordnung bewegbare Zusatzgewicht durch einen hydraulisch verstellbaren Frontlader gebildet sein kann, wie er an landwirtschaftlichen Traktoren zur Durchführung von Ladearbeiten verwendet wird. Das mittels der erfindungsgemäßen Einrichtung erzielbare ruhigere Fahrverhalten ermöglicht eine entsprechende Erhöhung des Fahrt- bzw. Transporttempos bei der Durchführung der Ladearbeiten.

Die Sensoreinrichtung ist typischerweise als bildgebendes Sensorsystem, insbesondere in Gestalt eines 3D-Laserscanners, einer Stereokamera und/oder eines Radarsystems, ausgebildet. Dies macht eine räumliche Erfassung des Oberflächenprofils möglich, sodass sich nicht nur Amplitude und Amplitudenverlauf des zu erwartenden Störungseintrags berechnen lassen, sondern auch eine zugehörige Entfernung gegenüber der Vorder- bzw. Hinterachse des landwirtschaftlichen Fahrzeugs. Letzteres erlaubt es bei Kenntnis der momentanen Fahrtgeschwindigkeit des landwirtschaftlichen Fahrzeugs, den Eintrittszeitpunkt des zu erwartenden Störungseintrags für jede der beiden Achsen separat abzuschätzen.

Daneben ist es denkbar, dass die elektronische Steuereinheit die Berechnung des zu erwartenden Störungseintrags in Abhängigkeit einer den Bodenzustand wiedergebenden Zustandsgröße modifiziert. Genauer gesagt kann die Zustandsgröße die Nachgiebigkeit des befahrenen Untergrunds, mithin die voraussichtliche Veränderung des Oberflächenprofils aufgrund einer reifenseitig hervorgerufenen Bodenkompression beschreiben. Hierbei ist der zu erwartende Störungseintrag erfahrungsgemäß umso geringer, je nachgiebiger der befahrene Untergrund ist. Die Modifikation kann entsprechend von für die Zustandsgröße vorgegebenen Kategorien erfolgen, insbesondere hinsichtlich der Bodenfeuchtigkeit (ausgetrockneter bzw. aufgeweichter Ackerboden) und der Bodenbeschaffenheit (Straßenasphalt, befestigter bzw. unbefestigter Wirtschaftsweg, lockerer bzw. festgefahrener Ackerboden).

Die Bestimmung der Zustandsgröße kann mittels eines den vorausliegenden Fahrbahnabschnitt abtastenden Nahinfrarot-Spektrometers und/oder auf Grundlage kartographierter Bodenangaben erfolgen, die die elektronische Steuereinheit mit seitens eines Navigationssystems bereitgestellten Fahrzeugpositionsdaten abgleicht. Das Nahinfrarot-Spektrometer erlaubt hierbei eine präzise Beurteilung der Bodenfeuchtigkeit, wohingegen die kartographierten Bodenangaben zusätzliche Informationen hinsichtlich der Bodenbeschaffenheit enthalten können. Letztere sind entweder in einer dem Navigationssystem zugeordneten lokalen Speichereinheit abgelegt oder stehen in einer zentralen Datenbank (Cloud) zur Verfügung, auf die die elektronische Steuereinheit über eine drahtlose Netzwerkverbindung zugreift. Denkbar ist auch eine Ermittlung der Bodenbeschaffenheit durch Analyse eines in einem Reifengürtel sensorisch erfassten Frequenz- und/oder Amplitudenspektrums.

Um die Bodenfeuchtigkeit insbesondere eines Ackerbodens aufgrund von Wettereinflüssen zu berücksichtigen, kann die elektronische Steuereinheit die kartographierten Bodenangaben nach Maßgabe meteorologischer Daten dynamisch anpassen.

Ferner kann eine bezüglich ihrer Federungs- und/oder Dämpfungscharakteristik verstellbare Radfedereinrichtung, Kabinenfederung und/oder Sitzfederung vorhanden sein, wobei die elektronische Steuereinheit die Federungs- und/oder Dämpfungscharakteristik im Sinne einer weiteren Reduzierung des zu erwartenden Störungseintrags anpasst. Im Falle eines landwirtschaftlichen Traktors ist üblicherweise eine der Vorderachse zugeordnete Radfedereinrichtung vorgesehen, die je nach Ausstattung des landwirtschaftlichen Traktors von einer aktiven Kabinen- und/oder Sitzfederung unterstützt wird.

Die erfindungsgemäße Einrichtung wird im Folgenden anhand der beigefügten Zeichnungen näher erläutert. Dabei sind hinsichtlich ihrer Funktion übereinstimmende bzw. vergleichbare Komponenten mit denselben Bezugszeichen gekennzeichnet. Es zeigen:
- Fig. 1: ein Ausführungsbeispiel der erfindungsgemäßen Einrichtung zur Beeinflussung der Vertikaldynamik eines landwirtschaftlichen Fahrzeugs, und
- Fig. 2: eine Sequenz zur Erläuterung der Funktionsweise der erfindungsgemäßen Einrichtung beim Überfahren einer Bodenwelle.

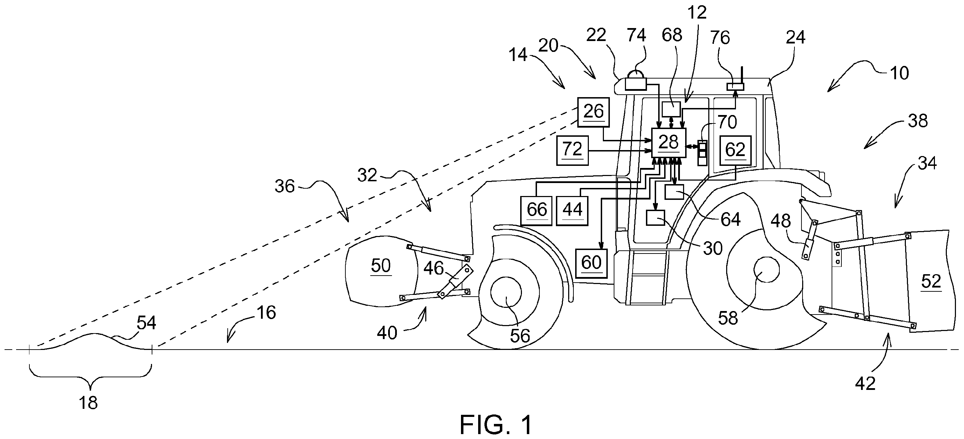

Fig. 1 zeigt ein Ausführungsbeispiel der erfindungsgemäßen Einrichtung zur Beeinflussung der Vertikaldynamik eines landwirtschaftlichen Fahrzeugs, im vorliegenden Fall eines landwirtschaftlichen Traktors.

Die in dem landwirtschaftlichen Traktor 10 untergebrachte Einrichtung 12 umfasst eine Sensoreinrichtung 14 zur Erfassung eines Oberflächenprofils 16 eines vorausliegenden Fahrbahnabschnitts 18. Die Sensoreinrichtung 14 ist als bildgebendes Sensorsystem 20 ausgebildet, und zwar in Gestalt einer im Frontbereich 22 eines Kabinendachs 24 angebrachten Stereokamera 26 zur räumlichen Erfassung des Oberflächenprofils 16 des vorausliegenden Fahrbahnabschnitts 18. Alternativ kann es sich auch um einen (nicht dargestellten) 3D-Laserscanner oder ein Radarsystem handeln. Die von der Sensoreinrichtung 14 bereitgestellten Bilddaten werden einer elektronischen Steuereinheit 28 zur weiteren Verarbeitung zugeführt, die nach Maßgabe des erfassten Oberflächenprofils 16 einen für den vorausliegenden Fahrbahnabschnitt 18 zu erwartenden Störungseintrag berechnet.

Genauer gesagt erfolgt die Berechnung des zu erwartenden Störungseintrags, mithin die am landwirtschaftlichen Traktor 10 störungsbedingt auftretende Vertikalbeschleunigung durch Bewertung des Verlaufs des erfassten Oberflächenprofils 16, wobei von der elektronischen Steuereinheit 28 zusätzlich die momentane Fahrtgeschwindigkeit des landwirtschaftlichen Traktors 10 berücksichtigt wird.

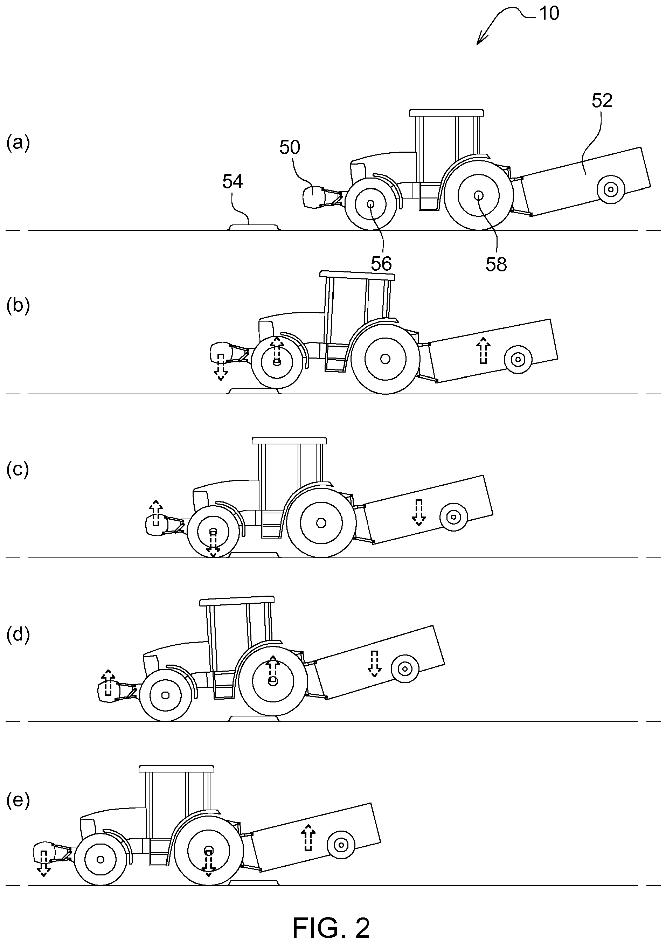

Des Weiteren ist eine erste bzw. zweite Stellanordnung 32, 34 vorhanden. Bei der ersten bzw. zweiten Stellanordnung 32, 34 handelt es sich um einen im Front- bzw. Heckbereich 36, 38 des landwirtschaftlichen Traktors 10 angebrachten vorderen bzw. hinteren Dreipunkt-Kraftheber 40, 42. Jeder der beiden Dreipunkt-Kraftheber 40, 42 lässt sich durch Ansteuerung eines zugehörigen Hydrauliksystems 44 über zugehörige Hydraulikzylinder 46, 48 seitens der elektronischen Steuereinheit 28 verschwenken. Im vorliegenden Fall trägt der vordere Dreipunkt-Kraftheber 40 ein Anbaugewicht 50 und der hintere Dreipunkt-Kraftheber 42 ein landwirtschaftliches Anbaugerät 52 in Gestalt eines schematisch dargestellten Bodenbearbeitungsgeräts (siehe hierzu Fig. 2). Landwirtschaftliches Anbaugerät 52 bzw. Anbaugewicht 50 bilden letztlich an dem landwirtschaftlichen Traktor 10 bzw. den Dreipunkt-Krafthebern 40, 42 angebrachte Zusatzmassen, die sich durch Ansteuerung der ersten bzw. zweiten Stellanordnung 32, 34 in vertikaler Richtung bewegen bzw. beschleunigen lassen.

Beispielhaft weist das von der Sensoreinrichtung 14 erfasste Oberflächenprofil 16 eine in Fahrtrichtung des landwirtschaftlichen Traktors 10 vorausliegende Bodenwelle 54 auf. Die elektronische Steuereinheit 28 leitet aus den seitens der Sensoreinrichtung 14 bereitgestellten Bilddaten neben Amplitude und Amplitudenverlauf des aufgrund der vorausliegenden Bodenwelle 54 zu erwartenden Störungseintrags ferner deren Entfernung gegenüber einer Vorder- und Hinterachse 56, 58 des ladwirtschaftlichen Traktors 10 ab. Aus der abgeleiteten Entfernung wiederum schätzt die elektronische Steuereinheit 28 in Abhängigkeit der momentanen Fahrtgeschwindigkeit des landwirtschaftlichen Traktors 10 den voraussichtlichen Eintrittszeitpunkt des zu erwartenden Störungseintrags für jede der beiden Achsen 56, 58 separat.

Des Weiteren ist eine der Vorderachse 56 zugeordnete Radfedereinrichtung 60 vorgesehen, die von einer aktiven Kabinen- und/oder Sitzfederung 62, 64 unterstützt wird. Sowohl die Radfedereinrichtung 60 als auch die Kabinen- und/oder Sitzfederung 62, 64 lassen sich seitens der elektronischen Steuereinheit 28 bezüglich ihrer Federungs- und/oder Dämpfungscharakteristik verstellen.

Fig. 2 zeigt eine Sequenz zur Erläuterung der Funktionsweise der erfindungsgemäßen Einrichtung beim Überfahren der Bodenwelle.

In einer ersten Phase (a) erfolgt die Erfassung der vorausliegenden Bodenwelle 54 mittels der Sensoreinrichtung 14. Auf Grundlage der von der Sensoreinrichtung 14 bereitgestellten Bilddaten ermittelt die elektronische Steuereinheit 28 den beim Überfahren der Bodenwelle 54 zu erwartenden Störungseintrag hinsichtlich Amplitude, Amplitudenverlauf und Eintrittszeitpunkt für jede der beiden Achsen 56, 58.

Ausgehend von diesen Informationen führt die elektronische Steuereinheit 28 in den darauffolgenden Phasen (b) bis (e) durch Ansteuerung der ersten bzw. zweiten Stellanordnung 32, 34 mittels der durch das Anbaugewicht 50 bzw. landwirtschaftliche Anbaugerät 52 jeweils gebildeten Zusatzmassen eine den zu erwartenden Störungseintrag reduzierende Ausgleichsbewegung aus. Hierbei wird von der elektronischen Steuereinheit 28 die Reaktionsträgheit der beiden Stellanordnungen 32, 34 berücksichtigt.

Die Ausführung der Ausgleichsbewegung wird in einer zweiten Phase (b) eingeleitet, sobald die Vorderreifen des landwirtschaftlichen Traktors 10 die Bodenwelle 54 erreichen bzw. berühren. Hierzu wird durch Absenken des Anbaugewichts 50 und gleichzeitiges Anheben des landwirtschaftlichen Anbaugeräts 52 ein den zu erwartenden Störungseintrag reduzierendes Gegenmoment am landwirtschaftlichen Traktor 10 hervorgerufen. Verlässt der Vorderreifen die Bodenwelle 54, so wird die Ausführung der Ausgleichsbewegung in einer dritten Phase (c) durch Anheben des Anbaugewichts 50 und gleichzeitiges Absenken des landwirtschaftlichen Anbaugeräts 52 vollendet. Der gleiche Vorgang wiederholt sich in einer vierten und fünften Phase (d), (e) für die Hinterreifen des landwirtschaftlichen Traktors 10.

Zugleich nimmt die elektronische Steuereinheit 28 eine Verstellung der Federungs- und/oder Dämpfungscharakteristik der Radfedereinrichtung 60 bzw. der aktiven Kabinen- und/oder Sitzfederung 62, 64 mit dem Ziel der weiteren Reduzierung des zu erwartenden Störungseintrags vor.

Die Berechnung des zu erwartenden Störungseintrags wie auch die Ausführung der Ausgleichsbewegung erfolgt für die Vorder- und Hinterachse 56, 58 separat. So tritt der zu erwartende Störungseintrag an der Vorder- und Hinterachse 56, 58 nicht nur zeitlich versetzt ein, sondern weist aufgrund der unterschiedlichen Bereifung bzw. Reifenvolumina auch entsprechende Unterschiede hinsichtlich Amplitude und Amplitudenverlauf auf. So führen die gemäß Fig. 1 an der Hinterachse 58 vorgesehenen großvolumigen Hinterreifen zu einer gegenüber der Vorderachse 56 (mit ihren vergleichsweise kleinvolumigen Vorderreifen) erhöhten Dämpfung des zu erwartenden Störungseintrags, was eine entsprechende Anpassung der mittels des Anbaugewichts 50 bzw. des landwirtschaftlichen Anbaugeräts 52 ausgeführten Ausgleichsbewegung erforderlich macht.

Insofern haben auch die spezifischen Dämpfungseigenschaften des verwendeten Reifenmodells wie auch der momentane Reifendruck Einfluss, sodass die elektronische Steuereinheit 28 bei der Berechnung des zu erwartenden Störungseintrags wie auch der Ausführung der Ausgleichbewegung neben Angaben hinsichtlich des Reifenmodells zusätzlich Reifendruckinformationen eines Reifendrucküberwachungssystems 66 berücksichtigt. Das Reifendrucküberwachungssystem ist hierbei Bestandteil einer nicht dargestellten Reifenfüllanlage des landwirtschaftlichen Traktors 10.

Bei der Ausführung der Ausgleichsbewegung berücksichtigt die elektronische Steuereinheit 28 zusätzlich die Masse und Schwerpunktlage des Anbaugewichts 50 bzw. des landwirtschaftlichen Anbaugeräts 52. Die entsprechenden Angaben sind aufgrund herstellerseitiger Spezifikationen des Anbaugewichts 50 bzw. des landwirtschaftlichen Anbaugeräts 52 bekannt und in einer der elektronischen Steuereinheit 28 zugeordneten lokalen Speichereinheit 68 hinterlegt. Das zugehörige Anbaugewicht 50 bzw. landwirtschaftliche Anbaugerät 52 ist über ein mit der elektronischen Steuereinheit 28 in Verbindung stehendes Bedienterminal 70 auswählbar. Optional werden Masse und Schwerpunktlage des Anbaugewichts 50 bzw. des landwirtschaftlichen Anbaugeräts 52 von der elektronischen Steuereinheit 28 durch Ausführung einer in der DE 10 2016 207 200 A1 bzw. der DE 10 2016 207 204 A1 beschriebenen automatisierten Kalibrierroutine bestimmt.

Zusätzlich modifiziert die elektronische Steuereinheit 28 die Berechnung des zu erwartenden Störungseintrags in Abhängigkeit einer den Bodenzustand wiedergebenden Zustandsgröße. Die Zustandsgröße beschreibt die Nachgiebigkeit des befahrenen Untergrunds, mithin die voraussichtliche Veränderung des Oberflächenprofils 16 aufgrund einer reifenseitig hervorgerufenen Bodenkompression. Hierbei ist der zu erwartende Störungseintrag erfahrungsgemäß umso geringer, je nach nachgiebiger der befahrene Untergrund ist. Die elektronische Steuereinheit 28 nimmt die Modifikation entsprechend von für die Zustandsgröße vorgegebenen Kategorien vor, genauer gesagt hinsichtlich der Bodenfeuchtigkeit (ausgetrockneter bzw. aufgeweichter Ackerboden), und der Bodenbeschaffenheit (Straßenasphalt, befestigter bzw. unbefestigter Wirtschaftsweg, lockerer bzw. festgefahrener Ackerboden).

Die Bestimmung der Zustandsgröße erfolgt mittels eines den vorausliegenden Fahrbahnabschnitt 18 abtastenden Nahinfrarot-Spektrometers 72 und/oder auf Grundlage kartographierter Bodenangaben, die die elektronische Steuereinheit 28 mit seitens eines Navigationssystems 74 bereitgestellten Fahrzeugpositionsdaten abgleicht. Letztere können von der elektronischen Steuereinheit 28 zugleich zur (redundanten) Bestimmung der momentanen Fahrtgeschwindigkeit herangezogen werden, indem der zeitliche Verlauf der Fahrzeugpositionsdaten ausgewertet wird.

Das Nahinfrarot-Spektrometer 72 erlaubt eine präzise Beurteilung der Bodenfeuchtigkeit, wohingegen die kartographierten Bodenangaben zusätzliche Informationen hinsichtlich der Bodenbeschaffenheit enthalten. Letztere sind entweder in der lokalen Speichereinheit 68 abgelegt oder stehen in einer zentralen Datenbank (Cloud) zur Verfügung, auf die die elektronische Steuereinheit 28 über eine mittels einer GSM-Schnittstelle 76 hergestellte drahtlose Netzwerkverbindung zugreift.

Um die Bodenfeuchtigkeit insbesondere eines Ackerbodens aufgrund von Wettereinflüssen zu berücksichtigen, werden der elektronischen Steuereinheit 28 über die GSM-Schnittstelle 76 zugleich meteorologische Daten zur Verfügung gestellt, nach deren Maßgabe diese die kartographierten Bodenangaben dynamisch anpasst.

## Patentansprüche

1. Einrichtung zur Beeinflussung der Vertikaldynamik eines landwirtschaftlichen Fahrzeugs, insbesondere eines landwirtschaftlichen Traktors, mit einer an dem landwirtschaftlichen Fahrzeug (10) angebrachten Zusatzmasse (50, 52), die sich durch Ansteuerung einer zugehörigen Stellanordnung (32, 34) in vertikaler Richtung bewegen lässt, einer Sensoreinrichtung (14) zur Erfassung eines Oberflächenprofils (16) eines vorausliegenden Fahrbahnabschnitts (18), und einer elektronischen Steuereinheit (28), die nach Maßgabe des erfassten Oberflächenprofils (16) einen für den vorausliegenden Fahrbahnabschnitt (18) zu erwartenden Störungseintrag berechnet, um durch Ansteuerung der Stellanordnung (32, 34) mittels der Zusatzmasse (50, 52) eine den zu erwartenden Störungseintrag reduzierende Ausgleichsbewegung auszuführen, wobei die Ausführung der Ausgleichsbewegung zur Verringerung eines trägheitsbedingten Zeitversatzes von der elektronischen Steuereinheit (28) unter Berücksichtigung der Reaktionsträgheit der Stellanordnung (32, 34) erfolgt.

2. Einrichtung nach Anspruch 1, **dadurch gekennzeichnet, dass** die Berechnung des zu erwartenden Störungseintrags wie auch die Ausführung der Ausgleichbewegung jeweils für eine Vorder- und Hinterachse (56, 58) des landwirtschaftlichen Fahrzeugs (10) separat erfolgt.

3. Einrichtung nach Anspruch 1 oder 2, **dadurch gekennzeichnet, dass** die elektronische Steuereinheit (28) bei der Berechnung des zu erwartenden Störungseintrags wie auch der Ausführung der Ausgleichbewegung neben Angaben hinsichtlich eines Reifenmodells zusätzlich Reifendruckinformationen eines Reifendrucküberwachungssystems (66) berücksichtigt.

4. Einrichtung nach wenigstens einem der Ansprüche 1 bis 3, **dadurch gekennzeichnet, dass** es sich bei der Stellanordnung (32, 34) um einen hydraulisch verschwenkbaren Dreipunkt-Kraftheber (40, 42) im Front- und/oder Heckbereich (36, 38) des landwirtschaftlichen Fahrzeugs (10) handelt.

5. Einrichtung nach wenigstens einem der Ansprüche 1 bis 4, **dadurch gekennzeichnet, dass** die Sensoreinrichtung (14) als bildgebendes Sensorsystem (20), insbesondere in Gestalt eines 3D-Laserscanners, einer Stereokamera (26) und/oder eines Radarsystems, ausgebildet ist.

6. Einrichtung nach wenigstens einem der Ansprüche 1 bis 5, **dadurch gekennzeichnet, dass** die elektronische Steuereinheit (28) die Berechnung des zu erwartenden Störungseintrags in Abhängigkeit einer den Bodenzustand wiedergebenden Zustandsgröße modifiziert.

7. Einrichtung nach Anspruch 6, **dadurch gekennzeichnet, dass** die Bestimmung der Zustandsgröße mittels eines den vorausliegenden Fahrbahnabschnitt (18) abtastenden Nahinfrarot-Spektrometers (72) und/oder auf Grundlage kartographierter Bodenangaben erfolgt, die die elektronisehe Steuereinheit (28) mit seitens eines Navigationssystems (74) bereitgestellten Fahrzeugpositionsdaten abgleicht.

8. Einrichtung nach Anspruch 7, **dadurch gekennzeichnet, dass** die elektronische Steuereinheit (28) die kartographierten Bodenangaben nach Maßgabe meteorologischer Daten dynamisch anpasst.

9. Einrichtung nach wenigstens einem der Ansprüche 1 bis 8, **dadurch gekennzeichnet, dass** eine bezüglich ihrer Federungs- und/oder Dämpfungscharakteristik verstellbare Radfedereinrichtung (60), Kabinenfederung (62) und/oder Sitzfederung (64) vorhanden ist, wobei die elektronische Steuereinheit (28) die Federungs- und/oder Dämpfungscharakteristik im Sinne einer weiteren Reduzierung des zu erwartenden Störungseintrags anpasst.

10. Landwirtschaftliches Fahrzeug, insbesondere landwirtschaftlicher Traktor, mit einer Einrichtung (12) zur Beeinflussung der Vertikaldynamik nach wenigstens einem der vorhergehenden Patentansprüche 1 bis 9.

## Claims

1. Device for influencing the vertical dynamics of an agricultural vehicle, in particular of an agricultural tractor, having an additional mass (50, 52) which is mounted on the agricultural vehicle (10) and can be moved in the vertical direction by actuating an associated actuator arrangement (32, 34), a sensor device (14) for sensing a surface profile (16) of a roadway section (18) lying ahead, and an electronic control unit (28) which calculates, in accordance with the sensed surface profile (16), a disruption input which is to be expected for the roadway section (18) lying ahead, in order, by actuating the actuator arrangement (32, 34) by means of the additional mass (50, 52), to execute a compensating movement which reduces the expected disruption input, wherein the compensating movement for reducing an inertia-related time delay of electronic control unit (28) is executed taking into account the reaction inertia of the actuator arrangement (32, 34).

2. Device according to Claim 1, **characterized in that** the calculation of the expected disruption input as well as the execution of the compensating movement each occur separately for a front axle (56) and rear axle (58) of the agricultural vehicle (10).

3. Device according to Claim 1 or 2, **characterized in that in that** during the calculation of the expected disruption input as well as the execution of the compensating movement the electronic control unit (28) takes into account not only data relating to a tyre model but also tyre pressure information of a tyre pressure monitoring system (66).

4. Device according to at least one of Claims 1 to 3, **characterized in that** the actuator arrangement (32, 34) is a hydraulically pivotable three-point hydraulic lift (40, 42) in the front area (36) and/or rear area (38) of the agricultural vehicle (10).

5. Device according to at least one of Claims 1 to 4, **characterized in that** the sensor device (14) is embodied as an imaging sensor system (20), in particular in the form of a 3D-laser scanner, stereo camera (26) and/or a radar system.

6. Device according to at least one of Claims 1 to 5, **characterized in that** the electronic control unit (28) modifies the calculation of the expected disruption input in accordance with the state variable which represents the state of the ground.

7. Device according to Claim 6, **characterized in that** the state variable is determined by means of a near-infrared spectrometer (72) which scans the roadway section (18) lying ahead and/or on the basis of cartographed ground information which the electronic control unit (28) compares with vehicle position data made available by a navigation system (74).

8. Device according to Claim 7, **characterized in that** the electronic control unit (28) adapts the cartographed ground information dynamically in accordance with the meteorological data.

9. Device according to at least one of Claims 1 to 8, **characterized in that** a wheel spring device (60), cabin suspension system (62) and/or seat suspension system (64) which can be adjusted relative to their suspension characteristic and/or damping characteristic are present, wherein the electronic control unit (28) adapts the suspension characteristic and/or damping characteristic in terms of bringing about a further reduction in the expected disruption input.

10. Agricultural vehicle, in particular agricultural tractor, having a device (12) for influencing the vertical dynamics according to at least one of the preceding Patent Claims 1 to 9.

## Revendications

1. Dispositif destiné à influer sur la dynamique verticale d'un véhicule agricole, en particulier d'un tracteur agricole, le dispositif comprenant une masse supplémentaire (50, 52) montée sur le véhicule agricole (10) et pouvant être déplacée dans la direction verticale par commande d'un ensemble de réglage associé (32, 34), un dispositif de détection (14) destiné à détecter un profil de surface (16) d'une portion de chaussée (18) située devant, et une unité de commande électronique (28) qui calcule, en fonction du profil de surface détecté (16), une entrée parasite attendue pour la portion de chaussée (18) située devant pour effectuer, par commande de l'ensemble de réglage (32, 34), un mouvement de compensation, réduisant l'entrée parasite attendue, à l'aide de la masse supplémentaire (50, 52), un mouvement de compensation qui réduit l'entrée parasite à attendre, l'exécution du mouvement de compensation étant effectuée par l'unité de commande électronique (28) en tenant compte de l'inertie de réaction de l'ensemble de réglage (32, 34) en vue de réduire un décalage dans le temps lié à l'inertie.

2. Dispositif selon la revendication 1, **caractérisé en ce que** le calcul de l'entrée parasite à attendre ainsi que l'exécution du mouvement de compensation sont effectués respectivement séparément pour un essieu avant et arrière (56, 58) du véhicule agricole (10).

3. Dispositif selon la revendication 1 ou 2, **caractérisé en ce que** l'unité de commande électronique (28) prend en outre en compte, en plus de données concernant un modèle de pneumatique, des informations de pression de pneumatique d'un système de surveillance de pression de pneumatique (66) dans le calcul de l'entrée parasite à attendre ainsi que dans la réalisation du mouvement de compensation.

4. Dispositif selon l'une au moins des revendications 1 à 3, **caractérisé en ce que** l'ensemble de réglage (32, 34) est un vérin à trois points (40, 42), pouvant pivoter hydrauliquement, qui est situé dans la région avant et/ou la région arrière (36, 38) du véhicule agricole (10).

5. Dispositif selon au moins l'une des revendications 1 à 4, **caractérisé en ce que** le dispositif de détection (14) est conçu comme un système de détection générateur d'image (20), notamment comme un scanner laser 3D, une caméra stéréo (26) et/ou un système radar.

6. Dispositif selon au moins l'une des revendications 1 à 5, **caractérisé en ce que** l'unité de commande électronique (28) modifie le calcul de l'entrée parasite attendue en fonction d'une grandeur d'état reproduisant l'état du sol.

7. Dispositif selon la revendication 6, **caractérisé en ce que** la détermination de la grandeur d'état est effectuée à l'aide d'un spectromètre proche infrarouge (72) balayant la portion de chaussée (18) située devant et/ou sur la base de données de sol cartographiées que l'unité de commande électronique (28) compare avec des données de position de véhicule fournies par un système de navigation (74).

8. Dispositif selon la revendication 7, **caractérisé en ce que** l'unité de commande électronique (28) adapte dynamiquement les données de sol cartographiées en fonction de données météorologiques.

9. Dispositif selon l'une au moins des revendications 1 à 8, **caractérisé en ce qu'**un dispositif de suspension de roue (60), une suspension de cabine (62) et/ou une suspension de siège (64) qui peuvent être réglés quant à leur caractéristique de suspension et/ou d'amortissement sont prévues, l'unité de commande électronique (28) adaptant les caractéristiques de suspension et/ou d'amortissement dans le sens d'une réduction supplémentaire de l'entrée parasite à attendre.

10. Véhicule agricole, en particulier tracteur agricole, comprenant un dispositif (12) destiné à influer sur la dynamique verticale selon l'une au moins des revendications 1 à 9 précédentes.
